# EUROPEAN PATENT APPLICATION

(11) **EP 1 235 097 A2**
(43) Date of publication of application: **28.08.2002**
(21) Application number: 02003636.4
(22) Date of filing: 18.02.2002
(51) Int. Cl.: G02C 9/00

(54) **Eyeglass frame equipped with attachment**

(30) Priority: 27.02.2001 IT VI010046
(71) Applicant: Gabbiano S.P.A., 46030 Cerese Di Virgilio (Mantova) (IT)
(72) Inventor: Dodi, Andrea, 46100 Mantova (IT)
(74) Representative: Bettello, Pietro, Dott. Ing.

(57) **Abstract**

Concerns an eyeglass frame equipped with an attachment, characterised in that the front and the connection and support system of the attachment constitute a single body.

## Description

The finding regards an eyeglass frame equipped with an attachment.

In the field of spectacles the use of an element comprising lenses, commonly known as an "attachment", which is arranged in front of the normal lenses for different purposes, be it for enlargement, or be it for close-up vision, or even for protection from the sun.

In the last few years, with the huge introduction of information technology in all areas of life, the need has come about to protect the eyes from the rays emitted from the computer screen and for such a purpose the attachment comprising, indeed, specific protection lenses have often been used.

Another reason which has led to the widespread use of the attachment is of an aesthetic nature, because it is necessary to satisfy the requirements of varying the colour of eyeglasses to match clothing or, more simply, to keep up with the latest fashion.

To satisfy such specific requirements a simple extremely cost-effective frame and an equally cost-effective attachment, which attaches onto the main frame of the glasses, is sufficient.

Moreover, both for specific use, and for the type of commercial product which derives from it, it is necessary for the final cost of the main eyeglasses and of the attachment to be very low.

These circumstances have led eyeglass producers to the realisation of frames equipped with very simple fasteners to connect the attachment.

For such a purpose we refer to patents nos. EP 0 862 074, GB 2184862, US 5614963, in which different types of attachment fasteners are described, applied for aesthetic purposes or to protect the eyes.

The purpose of the present finding is that of foreseeing a frame equipped with an attachment fastener which has a low cost.

A further purpose of the finding is that of realising an eyeglass frame like the one mentioned previously which allows a rapid connection and disconnection of the attachment.

Such purposes are obtained with a frame in which the face and the system for connecting and supporting the attachment constitute a single body and are obtained with a single moulding operation, preferably made in plastic material.

In greater detail, the connection is realised through at least two pins, present on the front part of the frame and arranged to protrude and substantially perpendicular to said frame, upon which the attachment is connected.

The attachment, advantageously, consists of a single thin foil, made of suitable material, equipped with holes or with another type of openings with which it connects to the pins of the main frame.

The finding shall be better specified through the description of a possible embodiment thereof, given as an illustrating example and not for limiting purposes, with the help of the attached table of drawings, where:
- fig. 1 represents a perspective view of a frame and of the attachment according to the finding;
- fig. 2 represents a detailed view of the fastener according to the finding.

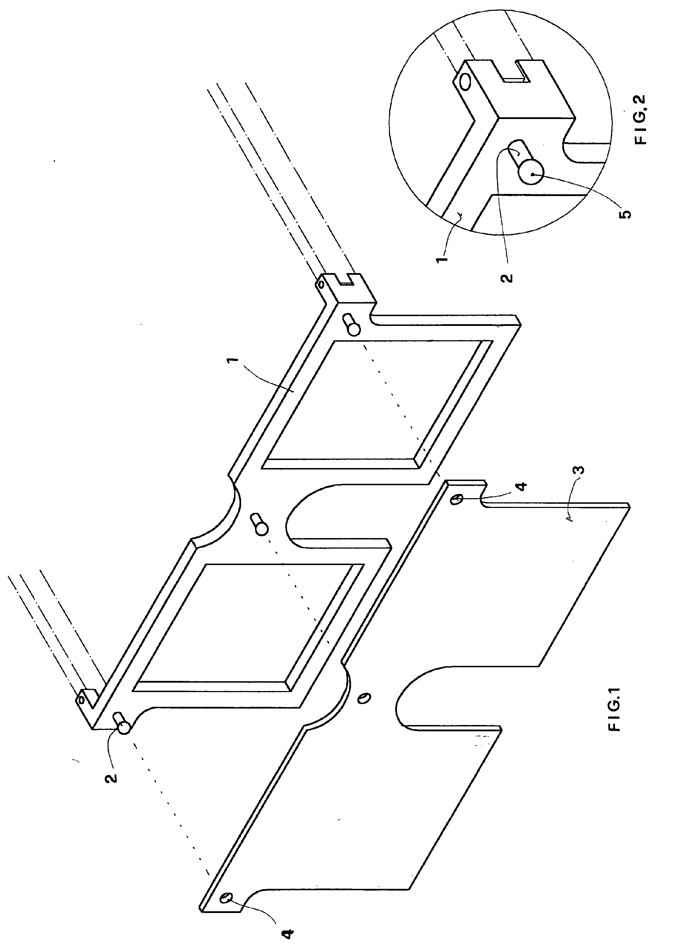

As can be seen in figure 1, the eyeglass frame 1 is equipped at the front with three pins 2, protruding perpendicular to said frame and which constitute a single body with it.

Constructively, the pins 2 and the frame 1 are obtained with a single moulding operation of a single type of material, preferably of the plastic type.

On the front of the frame 1 the attachment 3 is arranged, consisting of a simple thin foil made of material suitable for the purpose, such as a sun shield or a protective shield from the electromagnetic waves emitted by a computer screen.

On the attachment 3 some holes 4 are made arranged in such a way that, when the attachment is placed in contact with the front of the frame, the pins on the frame are inserted into the corresponding holes in the frame, so as to realise a stable connection between the two eyeglass components.

To make the connection stable and to prevent an accidental disconnection the pin 2 is equipped, at its end, with an enlarged end 5, preferably being spherical in shape, which is slightly smaller with respect to the shape of the corresponding hole 4 realised on the attachment, so as to slightly hinder the connection/disconnection action.

From that which has been outlined above the advantages of the finding are clear, with which it is possible to realise frames equipped with fasteners simply with a single moulding operation and therefore which are extremely cost-effective.

Obviously, embodiments which are different to the one illustrated are possible without, for this reason, moving outside of the scope of the claims defined hereafter.

## Claims

1. EYEGLASS FRAME EQUIPPED WITH AN ATTACHMENT, **characterised in that** the front and the connection and support system of the attachment constitute a single body.

2. EYEGLASS FRAME EQUIPPED WITH AN ATTACHMENT, according to claim 1, **characterised in that** the front and the connection system of the attachment are obtained with a single moulding operation.

3. EYEGLASS FRAME EQUIPPED WITH AN ATTACHMENT, according to claims 1 and 2, **characterised in that** the front and the connection system of the attachment are made out of the same material.

4. EYEGLASS FRAME EQUIPPED WITH AN ATTACHMENT, according to claim 3, **characterised in that** the frame and the connection system are made out of the same material.

5. EYEGLASS FRAME EQUIPPED WITH AN ATTACHMENT, according to claims 1 to 3, **characterised in that** the connection of the attachment to the frame is realised through at least two pins, present on the front of the frame and arranged to protrude and substantially perpendicular to said frame.

6. EYEGLASS FRAME EQUIPPED WITH AN ATTACHMENT, according to one or more of the previous claims, **characterised in that** the attachment consists of a single thin foil, made of appropriate material, equipped with holes or with another type of openings with which it connects to the pins protruding from the main frame.

7. EYEGLASS FRAME EQUIPPED WITH AN ATTACHMENT, according to one or more of the previous claims, **characterised in that** at least two pins are equipped at their ends with an enlarged element, which is of a slightly larger size with respect to the shape of the corresponding hole realised on the attachment, so as to slightly hinder the connection/disconnection action.

8. EYEGLASS FRAME EQUIPPED WITH AN ATTACHMENT, according to claim 7, **characterised in that** the enlarged end of the pin is substantially spherical.

9. EYEGLASS FRAME EQUIPPED WITH AN ATTACHMENT, according to one or more of the previous claims, **characterised in that** the attachment consists of a thin foil, without a frame.

10. EYEGLASS FRAME EQUIPPED WITH AN ATTACHMENT, according to claim 9, **characterised in that** the attachment consists of a sun protection lens and/or of a protective screen against electromagnetic waves emitted by computer screens.
